# EUROPEAN PATENT APPLICATION

(11) **EP 4 578 826 A1**
(43) Date of publication of application: **02.07.2025**
(21) Application number: 24785271.8
(22) Date of filing: 04.04.2024
(51) Int. Cl.: C01B 32/174, H01M 4/62

(54) **CARBON NANOTUBE DISPERSION AND PREPARATION METHOD THEREFOR**

(30) Priority: 05.04.2023 KR 20230044853
(71) Applicant: LG CHEM, LTD., Seoul 07336 (KR)
(72) Inventor: JANG, Young Jin, Daejeon 34122 (KR); YANG, Young Jo, Daejeon 34122 (KR); KIM, Eun Bum, Daejeon 34122 (KR); YOON, Ki Youl, Daejeon 34122 (KR)
(74) Representative: Hoffmann Eitle
(86) International application number: PCT/KR2024/004437
(87) International publication number: WO 2024/210571

(57) **Abstract**

The present invention relates to a carbon nanotube dispersion and a preparation method thereof, wherein the carbon nanotube dispersion includes carbon nanotubes, a first dispersant which is a cellulose-based dispersant, a second dispersant containing hexafluoropropylene (HFP) as a repeating unit, and a solvent, and the carbon nanotube dispersion of the present invention has a low initial viscosity and a low viscosity change rate, and thus, is excellent in storage stability and processability.

## Description

### TECHNICAL FIELD

### Cross-reference to Related Applications

This application claims the benefit of Korean Patent Application No. 10-2023-0044853, filed on April 5, 2023, in the Korean Intellectual Property Office, the disclosure of which is incorporated herein in its entirety by reference.

### Technical Field

The present invention relates to a carbon nanotube dispersion and a preparation method thereof, wherein the carbon nanotube dispersion itself has a low initial viscosity and also a small change in viscosity over time, and thus, has excellent storage stability, and has excellent processability when a coating process is performed.

### BACKGROUND ART

A carbon nanotube is a macromolecule in which a hexagonal honeycomb-shaped graphite surface, in which one carbon atom is bonded to three other carbon atoms, is rolled into a nano-sized diameter. The carbon nanotube is hollow, and thus, is lightweight, and has electrical conductivity as good as that of copper, thermal conductivity as excellent as that of diamond, and tensile strength as good as that of steel. According to the rolled-shape thereof, the carbon nanotube may be classified into a single-walled carbon nanotube (SWCNT), a multi-walled carbon nanotube (MWCNT), and a rope carbon nanotube.

Due to the excellent electrical conductivity thereof, the carbon nanotube has been widely used as a conductive material for a secondary battery in recent years, but carbon-based conductive materials including the carbon nanotube have a problem of being easily aggregated without being uniformly dispersed in an electrode slurry composition. If a conductive material is aggregated in an electrode slurry composition, the conductive material is not evenly distributed within an active material layer during a process of forming an electrode, which also leads to degradation in performance of a secondary battery. Therefore, studies on various techniques are being conducted to ensure that a conductive material is evenly dispersed in an electrode slurry composition.

Representatively, an attempt to increase dispersibility by introducing a conductive material and a dispersant together is the most common. Specifically, a method for improving dispersibility in a dispersion state by introducing a cellulose-based dispersant or a polymer component such as hydrogenated nitrile butadiene rubber (HNBR) as a dispersant. Specifically, if a cellulose-based dispersant, which is known as a dispersant of a typical carbon nanotube dispersion, is applied as a sole dispersant, there is an effect of reducing the rate of change in viscosity over time, but there is a problem in that the initial viscosity of the dispersion itself is high, and if the cellulose-based dispersant and a typical polymer-based dispersant, such as hydrogenated nitrile butadiene rubber (HNBR), are applied together, there is a problem in that not only the initial viscosity but also the rate of change in viscosity over time increase.

Therefore, there is a need for the development of a novel carbon nanotube dispersion which has a low initial viscosity and a minimized change in viscosity over time, and thus, is capable of maintaining viscosity as well as viscosity stability at an excellent level.

### Prior Art Document

(Patent Document 1) KR 10-2022-0003984 A

### DISCLOSURE OF THE INVENTION

### TECHNICAL PROBLEM

An object of the present invention is to provide a carbon nanotube dispersion and a preparation method thereof, wherein the initial viscosity of the dispersion itself is low, so that processability is excellent when a coating process is performed, and the storage stability is excellent due to a small change in viscosity over time.

### TECHNICAL SOLUTION

In order to achieve the above-described object, the present invention provides a carbon nanotube dispersion and a method for preparing the same.

Specifically, (1) the present invention provides a carbon nanotube dispersion including carbon nanotubes, a first dispersant, a second dispersant, and a solvent, wherein the first dispersant is a cellulose-based dispersant, the second dispersant is a polymer dispersant containing hexafluoropropylene (HFP) as a repeating unit, and the weight ratio between the first dispersant and the second dispersant is 100:10 to 100:400.

(2) In (1) above, the present invention provides a carbon nanotube dispersion, wherein the combined content of the first dispersant and the second dispersant is 700 parts by weight or less based on 100 parts by weight of the carbon nanotubes.

(3) In (1) or (2) above, the present invention provides a carbon nanotube dispersion, wherein the content of the first dispersant is 0.1 wt% to 5 wt% based on the total dispersion weight.

(4) In any one of (1) to (3) above, the present invention provides a carbon nanotube dispersion, wherein the content of the second dispersant is 0.1 wt% to 5 wt% based on the total dispersion weight.

(5) In any one of (1) to (4) above, the present invention provides a carbon nanotube dispersion, wherein the content of the carbon nanotubes is 5 wt% or less based on the total dispersion weight.

(6) In any one of (1) to (5) above, the present invention provides a carbon nanotube dispersion, wherein the first dispersant is one or more selected from the group consisting of carboxymethyl cellulose (CMC), carboxyethyl cellulose (CEC), hydroxyethylmethyl cellulose (HEMC), hydroxypropylmethyl cellulose (HPMC), hydroxymethyl cellulose (HMC), hydroxyethyl cellulose (HEC), and hydroxypropyl cellulose (HPC).

(7) In any one of (1) to (6) above, the present invention provides a carbon nanotube dispersion, wherein the first dispersant has an average molecular weight of 9,000 g/mol or less.

(8) In any one of (1) to (7) above, the present invention provides a carbon nanotube dispersion, wherein the second dispersant is one or more selected from the group consisting of PVdF-co-HFP, TFE-co-HFP, PTFE-co-HFP, and PVdF-co-HFP-TFE.

(9) In any one of (1) to (8) above, the present invention provides a carbon nanotube dispersion, wherein the second dispersant has an average molecular weight of 700,000 g/mol or less.

(10) The present invention provides a method for preparing a carbon nanotube dispersion according to any one of (1) to (9), the method including S10 mixing carbon nanotubes, a first dispersant, a second dispersant, and a solvent, and S20 dispersing the mixture.

(11) In (10) above, the present invention provides a method for preparing a carbon nanotube dispersion, wherein in Step (S20), dispersion is performed using a high-pressure disperser.

### ADVANTAGEOUS EFFECTS

A carbon nanotube dispersion of the present invention has a low initial viscosity of the dispersion itself, and thus, has excellent processability when a coating process is performed, and also has a small change in viscosity over time, and thus, has excellent storage stability.

### MDOE FOR CARRYING OUT THE INVENTION

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

The terminology used herein is for the purpose of describing particular exemplary embodiments only and is not intended to be limiting of the present invention. The terms of a singular form may include plural forms unless the context clearly indicates otherwise.

In the present specification, it should be understood that the terms, "include," "comprise," or "have" are intended to specify the presence of stated features, numbers, steps, elements, or combinations thereof, but do not preclude the presence or addition of one or more other features, numbers, steps, elements, or combinations thereof.

In the present specification, the "specific surface area" is measured by a BET method, and specifically, may be calculated from the adsorption amount of nitrogen gas under a liquid nitrogen temperature (77K) using Belsorp-mino II of BEL Japan Co.

In the present specification, the "length of a carbon nanotube" may be measured using an atomic force microscope or scanning electron microscope.

### Carbon nanotube dispersion

The present invention provides a carbon nanotube dispersion including carbon nanotubes, a first dispersant, a second dispersant, and a solvent, wherein the first dispersant is a cellulose-based dispersant, the second dispersant is a polymer dispersant containing hexafluoropropylene (HFP) as a repeating unit, and the weight ratio between the first dispersant and the second dispersant is 100:10 to 100:400.

As mentioned above, if a cellulose-based dispersant, which is known as a dispersant of a typical carbon nanotube dispersion, is applied as a sole dispersant, there is an effect of reducing the rate of change in viscosity over time, but there is a problem in that the initial viscosity of the dispersion itself is high. In order to compensate for the above-described shortcoming, a typical polymer-based dispersant, such as hydrogenated nitrile butadiene rubber (HNBR), is additionally applied in addition to the cellulose-based dispersant, but there is a problem in that not only the initial viscosity but also the rate of change in viscosity over time increase. Therefore, the inventors of the present invention conducted research on a dispersant capable of maintaining technical advantages of a typical cellulose-based dispersant, while overcoming the disadvantage of the cellulose-based dispersant, which is a high initial viscosity, and as a result, confirmed that if a polymer dispersant containing hexafluoropropylene (HFP) as a repeating unit is applied together with a cellulose-based dispersant, the initial viscosity and the rate of change in viscosity over time may be both lowered, and completed the present invention.

Particularly, it has been confirmed that in the present invention, the weight ratio between the first dispersant, which is a cellulose-based dispersant, and the second dispersant, which is a polymer dispersant containing hexafluoropropylene (HFP) as a repeating unit is controlled to 100:10 to 100:400, so that the initial viscosity and the rate of change in viscosity over time may be further lowered.

### (1) Carbon nanotube

A carbon nanotube functions as a conductive material in the dispersion of the present invention, and may be a single-walled carbon nanotube or a multi-walled carbon nanotube.

There is no particular limitation on the carbon nanotube used in the present invention, but it is preferable that the carbon nanotube has a specific surface area of 800 m²/g to 2,000 m²/g and a length of 0.1 µm to 10 µm. If the carbon nanotube satisfied the above-described conditions, the electrical conductivity may be particularly excellent. In addition, the specific surface area may be measured by the BET method, and more specifically, may be calculated from the amount of nitrogen gas adsorption under liquid nitrogen temperature (77 K) by using a specific surface area measuring device (BEL Japan Co., BELSORP-mini II). In addition, the above-described length may be measured using an atomic force microscope or scanning electron microscope.

In the carbon nanotube dispersion of the present invention, the content of carbon nanotubes may be 5.0 wt% or less, and specifically, may be 0.1 wt% or greater, 0.2 wt% or greater, 0.3 wt% or greater, 0.4 wt% or greater, or 0.5 wt% or greater, and 5.0 wt% or less, 4.5 wt% or less, 4.0 wt% or less, 3.5 wt% or less, 3.0 wt% or less, or 2.5 wt% or less. Meanwhile, if the content of the carbon nanotubes is too low, it is not possible to implement sufficient conductivity when the carbon nanotubes are used as a conductive material or the like, and if the content of the carbon nanotubes is too high, the viscosity of the dispersion excessively increases, so that the processability may decrease.

### (2) Dispersant

The carbon nanotube dispersion according to the present invention applies a cellulose-based dispersant as the first dispersant, and applies a polymer dispersant containing hexafluoropropylene as a repeating unit as the second dispersant, in order to improve the dispersibility of the carbon nanotubes.

### (2-1) First dispersant

The first dispersant used in the present invention is characterized by being a cellulose-based dispersant.

Specifically, the first dispersant may be one or more selected from the group consisting of carboxymethyl cellulose (CMC), carboxyethyl cellulose (CEC), hydroxyethylmethyl cellulose (HEMC), hydroxypropylmethyl cellulose (HPMC), hydroxymethyl cellulose (HMC), hydroxyethyl cellulose (HEC), and hydroxypropyl cellulose (HPC). The cellulose-based component contributes significantly to suppressing an increase in viscosity of the dispersion over time, and may improve the dispersibility of the carbon nanotube dispersion.

In the carbon nanotube dispersion of the present invention, the content of the first dispersant may be 0.1 wt% to 5 wt% based on the total dispersion weight, and specifically, may be 0.1 wt% or greater, 0.2 wt% or greater, 0.3 wt% or greater, 0.4 wt% or greater, 0.5 wt% or greater, 0.6 wt% or greater, 0.7 wt% or greater, 0.8 wt% or greater, 0.9 wt%, or 1 wt% or greater, and 5 wt% or less, 4.8 wt% or less, 4.6 wt% or less, 4.4 wt% or less, 4.2 wt% or less, 4.0 wt% or less, 3.8 wt% or less, 3.6 wt% or less, 3.4 wt% or less, 3.2 wt%, or 3.0 wt% or less.

If the content of the first dispersant component is less than the above-described range, the effect implemented by the cellulose-based dispersant is not sufficient, so that the dispersibility of the dispersion may be reduced, or the change in viscosity of the dispersion over time may increase. In addition, if the content of the first dispersant component is greater than the above-described range, when the carbon nanotube dispersion is applied to an electrode, the conductivity of the electrode may be deteriorated due to an excessive amount of a dispersant, and the dispersant may act as an impurity in the electrode.

Meanwhile, the first dispersant used in the present invention may have a weight average molecular weight (Mw) of 9,000 g/mol or less.

### (2-2) Second dispersant

The second dispersant used in the present invention is characterized by being a polymer dispersant containing hexafluoropropylene (HFP) as a repeating unit.

The second dispersant may be one or more selected from the group consisting of PVdF-co-HFP, TFE-co-HFP, PTFE-co-HFP, and PVdF-co-HFP-TFE. When applied to a carbon nanotube dispersion, the polymer dispersant containing hexafluoropropylene (HFP) as a repeating unit may serve to lower the initial viscosity of the dispersion by inducing the interaction between a large number of Fs present in the dispersant and the carbon nanotubes.

In the carbon nanotube dispersion of the present invention, the content of the second dispersant may be 0.1 wt% to 5 wt% based on the total dispersion weight, and specifically, may be 0.1 wt% or greater, 0.2 wt% or greater, 0.3 wt% or greater, 0.4 wt% or greater, 0.5 wt% or greater, 0.6 wt% or greater, 0.7 wt% or greater, 0.8 wt% or greater, 0.9 wt%, or 1 wt% or greater, and 5 wt% or less, 4.8 wt% or less, 4.6 wt% or less, 4.4 wt% or less, 4.2 wt% or less, 4.0 wt% or less, 3.8 wt% or less, 3.6 wt% or less, 3.4 wt% or less, 3.2 wt%, or 3.0 wt% or less.

If the content of the second dispersant component is less than the above-described range, the effect implemented by the hexafluoropropylene component is not sufficient, so that the initial viscosity of the dispersion itself may excessively increase, and if the content of the second dispersant component is greater than the above-described range, the content of the cellulose-based component is relatively reduced, so that the change in viscosity of the dispersion over time may increase.

Meanwhile, the second dispersant used in the present invention may have a weight average molecular weight (Mw) of 700,000 g/mol or less.

The weight ratio between the first dispersant and the second dispersant may be 100:10 to 100:400, and specifically, based on 100 parts by weight of the first dispersant, the second dispersant may be 10 parts by weight or greater, 20 parts by weight or greater, 30 parts by weight or greater, 40 parts by weight or greater, 50 parts by weight or greater, 60 parts by weight or greater, 70 parts by weight or greater, 80 parts by weight or greater, 90 parts by weight or greater, or 100 parts by weight or greater, and 400 parts by weight or less, 390 parts by weight or less, 380 parts by weight or less, 370 parts by weight or less, 360 parts by weight or less, 350 parts by weight or less, 340 parts by weight or less, 330 parts by weight or less, 320 parts by weight or less, 310 parts by weight or less, 300 parts by weight or less, 290 parts by weight or less, 280 parts by weight or less, 270 parts by weight or less, 260 parts by weight or less, or 250 parts by weight or less, and within the above-described range, the synergistic effect between the first dispersant and the second dispersant is maximized, thereby allowing the carbon nanotubes to be uniformly dispersed in the carbon nanotube dispersion, so that not only the viscosity is low, but also the viscosity may be maintained at a constant level over time.

Meanwhile, the combined content of the first dispersant and the second dispersant may be 700 parts by weight or less based on 100 parts by weight of the carbon nanotubes, and specifically, the combined content of the first dispersant and the second dispersant may be 50 parts by weight or greater, 100 parts by weight or greater, 150 parts by weight or greater, or 200 parts by weight or greater, and 700 parts by weight or less, 650 parts by weight or less, 600 parts by weight or less, or 550 parts by weight or less, based on 100 parts by weight of the carbon nanotubes.

If the combined content of the first dispersant and the second dispersant is greater than the above-described range, when the carbon nanotube dispersion is applied to an electrode, the conductivity of the electrode may be deteriorated due to an excessive amount of a dispersant, the dispersant may act as an impurity in the electrode, and the viscosity of the dispersion may rather increase, so that the viscosity stability may also decrease. Meanwhile, if the combined content is less than the above-described range, the effect of improving dispersibility, the effect of decreasing viscosity, and the effect of suppressing the change in viscosity over time may be insufficient.

By controlling the weight ratio between the first dispersant and the second dispersant, the carbon nanotube dispersion of the present invention may lower both the initial viscosity and the change in viscosity over time, and may implement excellent coating processability and storage stability.

### (3) Solvent

The solvent used in the present invention is a solvent for dispersing the carbon nanotubes and the dispersant, and may be used to prevent the aggregation of carbon nanotubes in a powder state when applied as they are in the preparation of an electrode slurry composition.

As the solvent, a solvent capable of dissolving or dispersing the carbon nanotubes and the dispersant at a predetermined level or above may be used. The solvent may be included in an amount such that the electrode slurry composition has an appropriate viscosity in consideration of the processability of the electrode slurry composition to be prepared using the carbon nanotube dispersion.

The solvent is for dispersing the carbon nanotubes and the dispersant, and is not particularly limited as long as it is commonly used in the art, and may be, for example, one or more selected from the group consisting of an amide-based polar organic solvent, an alcohol-based solvent, a glycol-based solvent, a glycol ether-based solvent, a ketone-based solvent, an ester-based solvent, and an aqueous solvent.

The amide-based polar organic solvent may be one or more selected from the group consisting of N-methyl pyrrolidone (NMP), dimethylformamide (DMF), diethylformamide, and dimethyl acetamide (DMAc).

The alcohol-based solvent may be one or more selected from the group consisting of methanol, ethanol, 1-propanol, 2-propanol (or isopropyl alcohol), 1-butanol, 2-methyl-1-propanol, 2-butanol, 1-methyl-2-propanol, pentanol, hexanol, heptanol , octanol, glycerin, trimethylolpropane, pentaerythritol, and sorbitol.

The glycol-based solvent may be one or more selected from the group consisting of ethylene glycol, diethylene glycol, triethylene glycol, propylene glycol, 1,3-propanediol, 1,3-butanediol, 1,5-pentanediol, and hexylene glycol.

The glycol ether-based solvent may be one or more selected from the group consisting of ethylene glycol mono methyl ether, diethylene glycol mono methyl ether, triethylene glycol mono methyl ether, tetra ethylene glycol mono methyl ether, ethylene glycol mono ethyl ether, diethylene glycol mono ethyl ether, triethylene glycol mono ethyl ether, tetra ethylene glycol mono ethyl ether, ethylene glycol mono butyl ether, diethylene glycol mono butyl ether, triethylene glycol mono butyl ether, and tetra ethylene glycol mono butyl ether.

The ketone-based solvent may be one or more selected from the group consisting of acetone, methyl ethyl ketone, methyl propyl ketone, and cyclopentanone.

The ester-based solvent may be one or more selected from the group consisting of ethyl acetate, gamma-butyrolactone, and epsilon-propiolactone.

In addition, the aqueous solvent may be water.

The carbon nanotube dispersion of the present invention may have an initial viscosity of 10,500 cP or less, preferably 10,000 cP or less, when the initial viscosity is measured using a viscometer (viscometer TV-25, TOKI SANGYO Co.) at 25°C and 1 rpm using rotor No. 1. In addition, while satisfying the above-described condition of the initial viscosity, the rate of change in viscosity of the dispersion per week may be 25% or less, preferably 20% or less.

The rate of change in viscosity per week is obtained by calculating how much the viscosity has increased over a week when the dispersion is stored at 25 °C for one week, and may be calculated using Equation 1 below. Viscosity change rate (%) = (Viscosity after 1 week - initial viscosity)/(initial viscosity) * 100%

Meanwhile, the above-described viscosity may be measured using a viscometer (TV-25, TOKI SANGYO Co.) and by starting the measurement at 1 rpm using rotor No. 1, and recoding the value after 10 minutes.

### Preparation method of carbon nanotube dispersion

The present invention provides a method for preparing the carbon nanotube dispersion described above, and specifically, provides a method for preparing the carbon nanotube dispersion, the method including S10 mixing carbon nanotubes, a first dispersant, a second dispersant, and a solvent, and S20 dispersing the mixture.

In the method of preparing a carbon nanotube dispersion of the present invention, the carbon nanotubes, the first dispersant and the second dispersant, and the solvent are the same as described above.

Meanwhile, Step S10 of mixing all of the above-described components may be performed by a method commonly applied to a mixing process, and for example, the step may be performed by installing an impeller and a vessel inside a melt bath (Dispermat-CA, VMA-Getzmann Co.), followed by performing mixing for 10 minutes at 400 rpm, and then introducing carbon nanotubes thereto, and treating the same for 60 minutes at 8000 rpm.

In addition, in the step S20, the formed mixture may be dispersed to prepare a final dispersion. In the dispersion step, the physical properties of the carbon nanotubes in the dispersion may become uniform. Meanwhile, the method for the dispersion may be selected from the group consisting of bead milling, ball milling, and high-pressure homogenization, and preferably, may be dispersion using a high-pressure disperser. If the dispersion method using a high-pressure disperser is used, it is possible to achieve more uniform dispersion, so that it is possible to maintain the viscosity of an obtained carbon nanotubes dispersion lower.

As an example, Step S20 above may be for treating a mixture prepared in Step S10 10 times under a pressure of 20,000 psi using a high-pressure disperser (PICOMAX, Micronox Co.) to prepare a carbon nanotube dispersion.

The carbon nanotube dispersion prepared through the method for preparing a carbon nanotube dispersion of the present invention may have an initial viscosity of 10,500 cP or less, preferably 10,000 cP or less. In addition, while satisfying the above-described condition of the initial viscosity, the rate of change in viscosity of the dispersion per week may be 25% or less, preferably 20% or less.

Hereinafter, the present invention will be described in more detail with reference to examples and experimental examples, but the present invention is not limited by these examples and experimental Examples. The examples according to the present invention may be modified into other various forms, and the scope of the present invention should not be construed as being limited to the examples described below. The examples of the present invention are provided to more fully describe the present invention to those skilled in the art.

### Materials

Carbon nanotubes (TUBALL, OCSiAl Co.) having a specific surface area of 1,160 m²/g and a length of 5 µm or greater were prepared. N-methyl-2-pyrrolidone(NMP) was prepared as a solvent.

As a first dispersant of an example, carboxymethyl cellulose (weight average molecular weight 5,200 g/mol) or carboxyethyl cellulose (weight average molecular weight 7,000 g/mol) was used, and as a second dispersant thereof, PVdF-co-HFP (weight average molecular weight: 148,000 g/mol) was used.

As a first dispersant of a comparative example, carboxymethyl cellulose (weight average molecular weight: 5,200 g/mol) or polyvinyl pyrrolidone (PVP) (weight average molecular weight: 10,000 g/mol) was used, and as a second dispersant thereof, polyvinylidene fluoride (PVdF) (weight average molecular weight: 1,000,000 g/mol), hydrogenated nitrile butadiene rubber (HNBR) (weight average molecular weight: 200,000 g/mol), or PVdF-co-HFP (weight average molecular weight: 148,000 g/mol) was used.

### Examples and Comparative Examples

The first dispersant and the second dispersant of the above-described materials, and NMP as a solvent were mixed to prepare a mixture. An impeller and a vessel were installed inside a melt bath (Dispermat-CA, VMA-Getzmann Co.) and then the dispersants and the solvent of the mixture were mixed by being stirred for 10 minutes at 400 rpm. Carbon nanotubes (TUBALL, OCSiAl Co.) were introduced thereto such that the content thereof in a dispersion was to be 0.6 wt%, and treated for 60 minutes at 8,000 rpm.

The resulting product was treated 10 times under a pressure of 20,000 psi using a high-pressure disperser (PICOMAX, Micronox Co.) to prepare a carbon nanotube dispersion.

The concentration of the carbon nanotubes used in each of Examples and Comparative Examples, the type and content(based on the total dispersion weight) used therein, and the weight ratio between the dispersants are summarized in Table 1 below.

**[Table 1]**

| | CNT conte nt (wt%) | First dispersant (A) | | Second dispersant (B) | | A:B weight ratio |
|---|---|---|---|---|---|---|
| | | Type | Input amount (wt%) | Type | Input amount (wt%) | |
| Example 1 | 0.6 | CMC | 0.75 | PVdF-co-HFP | 2.25 | 100:300 |
| Example 2 | 0.6 | CMC | 1.5 | PVdF-co-HFP | 1.5 | 100:100 |
| Example 3 | 0.6 | CMC | 2.0 | PVdF-co-HFP | 1.0 | 100:50 |
| Example 4 | 0.6 | CMC | 2.25 | PVdF-co-HFP | 0.75 | 100:33 |
| Example 5 | 0.6 | CEC | 0.75 | PVdF-co-HFP | 2.25 | 100:300 |
| Comparative Example 1 | 0.6 | CMC | 3.0 | - | - | - |
| Comparative Example 2 | 0.6 | CMC | 2.25 | PVdF | 0.75 | 100:33 |
| Comparative Example 3 | 0.6 | CMC | 1.2 | HNBR | 1.8 | 100:150 |
| Comparative Example 4 | 0.6 | CMC | 0.05 | PVdF-co-HFP | 2.95 | 100:5900 |
| Comparative Example 5 | 0.6 | CMC | 0.5 | PVdF-co-HFP | 2.5 | 100:500 |
| Comparative Example 6 | 0.6 | CMC | 2.8 | PVdF-co-HFP | 0.2 | 100:7 |
| Comparative Example 7 | 0.6 | CMC | 2.95 | PVdF-co-HFP | 0.05 | 100:0.017 |
| Comparative Example 8 | 0.6 | PVP | 1.0 | PVdF-co-HFP | 2.0 | 100:200 |
| Comparative Example 9 | 0.6 | - | - | PVdF-co-HFP | 3.0 | - |

### Experimental Example. Confirmation of initial viscosity and rate of change in viscosity of dispersion

The viscosity was measured for each of the carbon nanotube dispersions of Examples 1 to 5 and Comparative Examples 1 to 9, and the viscosity thereof was measured again after leaving the carbon nanotube dispersions to stand at 25 °C for 1 week, and the results are shown in Table 2 below.

The viscosity was measured using a viscometer (TV-25, TOKI SANGYO Co.) at 25 °C and 1 rpm using rotor No. 1.

**[Table 2]**

| | Viscosity | | |
|---|---|---|---|
| | Initial viscosity (cP) | Viscosity after 1 week (cP) | Viscosity change rate (%) |
| Example 1 | 7,900 | 9,500 | 20 |
| Example 2 | 9, 900 | 11,000 | 11 |
| Example 3 | 10,000 | 10,200 | 2 |
| Example 4 | 9, 800 | 10,000 | 2 |
| Example 5 | 8,200 | 9,200 | 12 |
| Comparative Example 1 | 13,000 | 13,500 | 4 |
| Comparative Example 2 | 11,000 | 11,500 | 5 |
| Comparative Example 3 | 18,800 | 26,000 | 38 |
| Comparative Example 4 | 12.500 | 17,900 | 43 |
| Comparative Example 5 | 14,300 | 19,200 | 34 |
| Comparative Example 6 | 12,500 | 14,100 | 13 |
| Comparative Example 7 | 17,100 | 24,200 | 42 |
| Comparative Example 8 | 10,900 | 13,000 | 19 |
| Comparative Example 9 | 11,000 | 16,400 | 49 |

As can be confirmed in Table 2 above, when comparing Examples 1 to 5 and Comparative Examples 1 to 9 in which the same carbon nanotubes and the same solvent were applied in the same contents, it can be confirmed that Examples 1 to 5 in which the first dispersant and the second dispersant of the present invention were used in a specific weight ratio range had a low initial viscosity and also a low rate of change in viscosity after one week. On the other hand, in the case of Comparative Example 1 in which a second dispersant was not used, the rate of change in viscosity was low, but the initial viscosity was as high as 13,000 cP, and in the case of Comparative Example 2 in which PVdF was used as the second dispersant, the viscosity change rate was low, but the initial viscosity was 11,000 cP, which was also high, and in addition, gel shrinkage (syneresis) was observed, which confirms that the storage stability is poor. Particularly, in the case of Comparative Example 3 in which hydrogenated nitrile butadiene rubber (HNBR) was used as a second dispersant, both the initial viscosity and the rate of change in viscosity were excessively high, so that the storage stability was significantly reduced. In the case of Comparative Example 8 in which a polymer dispersant containing HFP was used as the second dispersant, but instead of a cellulose-based dispersant, PVP was used as the first dispersant, the initial viscosity was as high as close to 11,000 cP, and in the case of Comparative Example 9 in which the polymer dispersant containing HFP was used alone, not only that the initial viscosity was high, but also that the rate of change in viscosity was excessively high, so that the storage stability was significantly decreased, and the gel shrinkage was also observed.

In addition, in the cases of Comparative Examples 4 to 7 in which the cellulose-based dispersant and the polymer dispersant containing HFP were respectively used as the first and second dispersants, but the weight ratio between the dispersants was out of the range of 100:10 to 100:400, the initial viscosity thereof was all as high as 12,500 cP or greater, and particularly, in the case of Comparative Example 5 in which the polymer dispersant containing HFP was included in excess, the rate of change in viscosity was also high.

From the results, it has been confirmed that the dispersion of the present invention has excellent processability due to a low initial viscosity and a low rate of change in viscosity, and accordingly, has improved storage stability.

## Claims

1. A carbon nanotube dispersion comprising:
carbon nanotubes;
a first dispersant;
a second dispersant; and
a solvent,
wherein:
the first dispersant is a cellulose-based dispersant;
the second dispersant is a polymer dispersant containing hexafluoropropylene as a repeating unit; and
the weight ratio between the first dispersant and the second dispersant is 100:10 to 100:400.

2. The carbon nanotube dispersion of claim 1, wherein the combined content of the first dispersant and the second dispersant is 700 parts by weight or less based on 100 parts by weight of the carbon nanotubes.

3. The carbon nanotube dispersion of claim 1, wherein the content of the first dispersant is 0.1 wt% to 5 wt% based on the total dispersion weight.

4. The carbon nanotube dispersion of claim 1, wherein the content of the second dispersant is 0.1 wt% to 5 wt% based on the total dispersion weight.

5. The carbon nanotube dispersion of claim 1, wherein the content of the carbon nanotubes is 5 wt% or less based on the total dispersion weight.

6. The carbon nanotube dispersion of claim 1, wherein the first dispersant is one or more selected from the group consisting of carboxymethyl cellulose (CMC), carboxyethyl cellulose (CEC), hydroxyethylmethyl cellulose (HEMC), hydroxypropylmethyl cellulose (HPMC), hydroxymethyl cellulose (HMC), hydroxyethyl cellulose (HEC), and hydroxypropyl cellulose (HPC).

7. The carbon nanotube dispersion of claim 1, wherein the first dispersant has an average molecular weight of 9,000 g/mol or less.

8. The carbon nanotube dispersion of claim 1, wherein the second dispersant is one or more selected from the group consisting of PVdF-co-HFP, TFE-co-HFP, PTFE-co-HFP, and PVdF-co-HFP-TFE.

9. The carbon nanotube dispersion of claim 1, wherein the second dispersant has an average molecular weight of 700,000 g/mol or less.

10. A method for preparing a carbon nanotube dispersion of claim 1, the method comprising:
(S10) mixing carbon nanotubes, a first dispersant, a second dispersant, and a solvent; and
(S20) dispersing the mixture.

11. The method of claim 10, wherein In Step (S20), dispersion is performed using a high-pressure disperser.
